# EUROPEAN PATENT APPLICATION

(11) **EP 4 513 977 A1**
(43) Date of publication of application: **26.02.2025**
(21) Application number: 22937903.7
(22) Date of filing: 21.04.2022
(51) Int. Cl.: H04W 52/02, H04W 24/00, H04W 72/04

(54) **WIRELESS COMMUNICATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2022/088320
(87) International publication number: WO 2023/201667

(57) **Abstract**

Provided in the embodiments of the present disclosure is a wireless communication method. The method is executed by means of a terminal, and comprises: using or stopping using a predetermined operating mode, wherein the predetermined operating mode is an operating mode in which a first transceiver of a terminal wakes up a second transceiver of the terminal after receiving a predetermined wake-up signal.

## Description

### FIELD

The present invention relates to, but not limited to, the field of wireless communication technology, and more particularly to a wireless communication method and apparatus, a communication device and a storage medium.

### BACKGROUND

In wireless communication technology, in order to save power, a wakeup signal (WUS) is introduced for a radio resource control (RRC) connected state; and a power-saving signal, namely a paging early indication (PEI), is introduced for an RRC idle state. In either case, the terminal needs to detect the wakeup signal or the power-saving signal through a radio frequency module.

In the related art, a separate receiver (such as a low power wakeup receiver) is introduced for receiving the wakeup signal or the power-saving signal. After the introduction of a separate receiver, it remains an unsolved problem how to control the terminal such that it can flexibly select the working mode to meet the needs in practical work.

### SUMMARY

Embodiments of the present invention provide a wireless communication method and apparatus, a communication device and a storage medium.

According to a first aspect of embodiments of the present invention, there is provided a wireless communication method, which is performed by a terminal, and includes: using or stopping using a predetermined working mode. The predetermined working mode is a working mode that a second transceiver of the terminal is woken up after a first transceiver of the terminal receives a predetermined wakeup signal.

In an embodiment, the method further includes: receiving predetermined information sent by an access network device. The predetermined information indicates: to use or stop using the predetermined working mode. Using or stopping using the predetermined working mode includes: using or stopping using the predetermined working mode according to the predetermined information.

In an embodiment, receiving the predetermined information sent by the access network device includes: receiving the predetermined information sent by the access network device via a third predetermined RRC message; receiving the predetermined information sent by the access network device via an RRC connection release message; or receiving the predetermined information sent by the access network device via an RRC reconfiguration message.

In an embodiment, the method further includes: sending request information to the access network device. The request information is configured to: request to use or stop using the predetermined working mode. Receiving the predetermined information sent by the access network device includes: receiving response information sent by the access network device in response to the request information.

In an embodiment, the terminal is in a radio resource control (RRC) non-connected state; and sending the request information to the access network device includes: sending the request information to the access network device via a random access message, where the random access message includes one of: a msgA message or a msg3 message; or sending the request information to the access network device via a first predetermined RRC message.

In an embodiment, the terminal is in a radio resource control (RRC) connected state; and sending the request information to the access network device includes: sending the request information to the access network device via a second predetermined RRC message; or sending the request information to the access network device via a user equipment assistance information (UAI) message.

In an embodiment, the request information includes at least one of: information that the terminal is in a relax measurement state; information that the terminal is in a measurement stopped state; information that the terminal meets an evaluation criterion of relax measurement; information that the terminal meets an evaluation criterion of stopping measurement; duration information estimated in which no uplink data is transmitted; or duration information in which the predetermined working mode requested is used.

In an embodiment, the terminal is in an RRC non-connected state; and sending the request information to the access network device includes: sending the request information to the access network device after cell reselection.

In an embodiment, the predetermined information indicates: a transition duration, wherein if a second predetermined condition is met within the transition duration, the terminal enters the predetermined working mode; and/or a channel monitoring parameter for the terminal operating in the predetermined working mode.

In an embodiment, the second predetermined condition includes at least one of: no uplink data being received within the transition duration; an evaluation criterion of relax measurement being met within the predetermined transition duration; or an evaluation criterion of stopping measurement being met within the predetermined transition duration.

In an embodiment, the channel monitoring parameter includes at least one of: a monitoring period; a monitoring duration in each monitoring period; a monitoring channel; time domain information, frequency domain information and/or code domain information for monitoring the predetermined wakeup signal; a paging group identification (ID) to be monitored; or a duration in which the terminal is capable of being in the predetermined working mode.

In an embodiment, the response information indicates refusal of the request; and the response information further indicates that the terminal maintains a current working mode or RRC state.

In an embodiment, the method further includes: in response to the terminal being in the predetermined working mode and a first predetermined condition being met, stopping using the predetermined working mode.

In an embodiment, the first predetermined condition includes at least one of: no radio frame being monitored; the number of failures in decoding the predetermined wakeup signal reaching a predetermined number; failure to decode the predetermined wakeup signal; or an intensity of the predetermined wakeup signal decoded being lower than a predetermined intensity.

According to a second aspect of embodiments of the present invention, there is provided a wireless communication method, which is performed by an access network device, and includes: sending predetermined information to a terminal. The predetermined information is configured to indicate to use or stop using a predetermined working mode; and the predetermined working mode is a working mode that a second transceiver of the terminal is woken up after a first transceiver of the terminal receives a predetermined wakeup signal.

In an embodiment, the sending the predetermined information to the terminal includes: sending the predetermined information to the terminal via a third predetermined RRC message; sending the predetermined information to the terminal via an RRC connection release message; or sending the predetermined information to the terminal via an RRC reconfiguration message.

In an embodiment, the method further includes: receiving request information sent by the terminal. The request information is configured to: request to use or stop using the predetermined working mode. Sending the predetermined information to the terminal includes: sending response information to the terminal in response to the request information.

In an embodiment, the terminal is in a radio resource control (RRC) non-connected state; and receiving the request information sent by the terminal includes: receiving the request information sent by the terminal via a random access message; or receiving the request information sent by the terminal via a first predetermined RRC message. The random access message includes one of: a msgA message or a msg3 message.

In an embodiment, the terminal is in a radio resource control (RRC) connected state; and receiving the request information sent by the terminal includes: receiving the request information sent by the terminal via a second predetermined RRC message; or receiving the request information sent by the terminal via a user equipment assistance information (UAI) message.

In an embodiment, the request information includes at least one of: information that the terminal is in a relax measurement state; information that the terminal is in a measurement stopped state; information that the terminal meets an evaluation criterion of relax measurement; information that the terminal meets an evaluation criterion of stopping measurement; duration information estimated in which no uplink data is transmitted; or duration information in which the predetermined working mode requested is used.

In an embodiment, the method further includes: determining whether to accept the request information according to assistance information obtained from a core network device. The assistance information includes: information that extended discontinuous reception (e-DRX) is configured for the terminal.

In an embodiment, the predetermined information indicates: a transition duration, wherein if a second predetermined condition is met within the transition duration, the terminal enters the predetermined working mode; and/or a channel monitoring parameter for the terminal operating in the predetermined working mode.

In an embodiment, the second predetermined condition includes at least one of: no uplink data being received within the transition duration; an evaluation criterion of relax measurement being met within the predetermined transition duration; or an evaluation criterion of stopping measurement being met within the predetermined transition duration.

In an embodiment, the channel monitoring parameter includes at least one of: a monitoring period; a monitoring duration in each monitoring period; a monitoring channel; time domain information, frequency domain information and/or code domain information for monitoring the predetermined wakeup signal; a paging group identification (ID) to be monitored; or a duration in which the terminal is capable of being in the predetermined working mode.

In an embodiment, the response information indicates refusal of the request; and the response information further indicates that the terminal maintains a current working mode or RRC state.

According to a third aspect of embodiments of the present invention, there is provided a wireless communication apparatus, which includes: a processing module, configured to use or stop using a predetermined working mode. The predetermined working mode is a working mode that a second transceiver of the terminal is woken up after a first transceiver of the terminal receives a predetermined wakeup signal.

According to a fourth aspect of embodiments of the present invention, there is provided a wireless communication apparatus, which includes: a receiving module, configured to receive request information sent by a terminal. The request information is configured to request to use or stop using a predetermined working mode; and the predetermined working mode is a working mode that a second transceiver of the terminal is woken up after a first transceiver of the terminal receives a predetermined wakeup signal.

According to a fifth aspect of embodiments of the present invention, there is provided a communication device, which includes: a processor; and a memory for storing instructions executable by the processor. The processor is configured to run the executable instructions to perform the method according to any embodiment of the present invention.

According to a sixth aspect of embodiments of the present invention, there is provided a computer storage medium having stored therein computer-executable instructions that, when executed by a processor, cause the method according to any embodiment of the present invention to be performed.

In embodiments of the present invention, a predetermined working mode is used or stopped; and the predetermined working mode is a working mode that a second receiver of the terminal is woken up after a first receiver of the terminal receives a predetermined wakeup signal. In this way, the terminal can use or stop using the working mode that the second receiver of the terminal is woken up after the first receiver of the terminal receives the predetermined wakeup signal. As compared with a manner where it is not clear how the terminal works based on the predetermined working mode or a manner where the terminal always works in the predetermined working mode, in the method of the present invention, the predetermined working mode can be used or stopped based on the request of the terminal, which can adapt to the terminal's needs and has a strong adaptability.

### BRIEF DESCRIPTION OF THE DRAWINGS

FIG. 1 is a schematic diagram showing a wireless communication system according to an example embodiment.
FIG. 2 is a schematic flowchart showing a wireless communication method according to an example embodiment.
FIG. 3 is a schematic flowchart showing a wireless communication method according to an example embodiment.
FIG. 4 is a schematic flowchart showing a wireless communication method according to an example embodiment.
FIG. 5 is a schematic flowchart showing a wireless communication method according to an example embodiment.
FIG. 6 is a schematic flowchart showing a wireless communication method according to an example embodiment.
FIG. 7 is a schematic flowchart showing a wireless communication method according to an example embodiment.
FIG. 8 is a schematic flowchart showing a wireless communication method according to an example embodiment.
FIG. 9 is a schematic flowchart showing a wireless communication method according to an example embodiment.
FIG. 10 is a schematic flowchart showing a wireless communication method according to an example embodiment.
FIG. 11 is a schematic flowchart showing a wireless communication method according to an example embodiment.
FIG. 12 is a schematic flowchart showing a wireless communication method according to an example embodiment.
FIG. 13 is a schematic flowchart showing a wireless communication method according to an example embodiment.
FIG. 14 is a schematic block diagram showing a wireless communication apparatus according to an example embodiment.
FIG. 15 is a schematic block diagram showing a wireless communication apparatus according to an example embodiment.
FIG. 16 is a schematic block diagram showing a wireless communication apparatus according to an example embodiment.
FIG. 17 is a schematic block diagram showing a wireless communication apparatus according to an example embodiment.
FIG. 18 is a schematic block diagram showing a terminal according to an example embodiment.
FIG. 19 is a schematic block diagram showing a base station according to an example embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

Terms used in embodiments of the present invention are only for the purpose of describing specific embodiments, but should not be construed to limit the present invention. As used in the embodiments of the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. Depending on the context, the term "if" as used herein may be construed to mean "when" or "upon" or "in response to determining".

For the purposes of brevity and ease of understanding, terms "greater than" or "less than" are used herein for indicating size relationships. However, it can be understood for a person skilled in the art that the term "greater than" also covers a meaning of "greater than or equal to", and the term "less than" also covers a meaning of "less than or equal to".

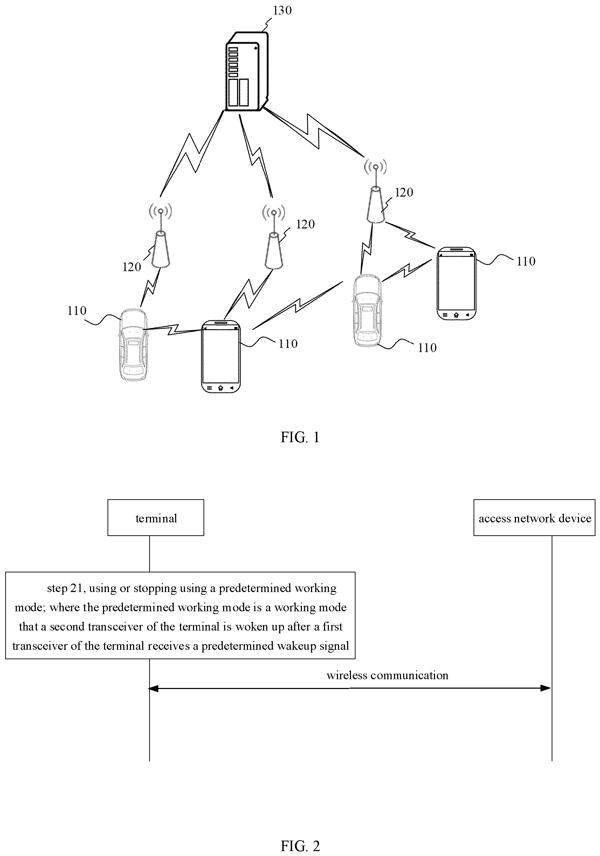

Referring to FIG. 1, FIG. 1 is a schematic diagram showing a wireless communication system provided by embodiments of the present invention. As shown in FIG. 1, the wireless communication system is a communication system based on a mobile communication technology, and may include several user equipment 110 and several base stations 120.

The user equipment 110 may refer to a device that provides voice and/or data connectivity to a user. The user equipment 110 can communicate with one or more core networks via a radio access network (RAN). The user equipment 110 may be an Internet of Things terminal, such as a sensor device, a mobile phone and a computer with an Internet of Things terminal. For example, the user equipment 110 may be a fixed, portable, pocket-sized, handheld, built-in computer or vehicle-mounted apparatus, such as a station (STA), a subscriber unit, a subscriber station, a mobile station, a mobile, a remote station, an access point, a remote terminal, an access terminal, a user terminal, a user agent, a user device, or a user equipment (UE). Alternatively, the user equipment 110 may be a device of an unmanned aerial vehicle. Alternatively, the user equipment 110 may be a vehicle-mounted device, for example, an electronic control unit with a wireless communication function, or a wireless user equipment externally connected with an electronic control unit. Alternatively, the user equipment 110 may be a roadside device, such as a street lamp, a signal lamp or other roadside devices with a wireless communication function.

The base station 120 may be a network side device in the wireless communication system. The wireless communication system may be a 4th generation mobile communication (4G) system, also referred to as a long term evolution (LTE) system. Alternatively, the wireless communication system may be a 5G system, also referred to as a new radio system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in the 4G system. Alternatively, the base station 120 may be a base station (gNB) adopting a central-distributed architecture in the 5G system. When adopting the central-distributed architecture, the base station 120 usually includes a central unit (CU) and at least two distributed units (DUs). The central unit is provided with protocol stacks of a packet data convergence protocol (PDCP) layer, a radio link control (RLC) layer and a media access control (MAC) layer. The distributed units are provided with a protocol stack of a physical (PHY) layer. The specific implementation of the base station 120 is not limited in embodiments of the present invention.

A wireless connection may be established between the base station 120 and the user equipment 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between the user equipment 110, such as a vehicle to vehicle (V2V) communication, a vehicle to infrastructure (V2I) communication and a vehicle to pedestrian (V2P) communication in a vehicle to everything (V2X) communication.

Here, the above user equipment may be considered as the terminal in the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in embodiments of the present invention.

In order to facilitate the understanding of those skilled in the art, several implementations are listed in embodiments of the present invention to clearly illustrate technical solutions as set forth in embodiments of the present invention. Of course, those skilled in the art can understand that various embodiments provided in the present invention may be executed separately, in combination with the method as described in other embodiments of the present invention, or further in combination with some methods in other related art, which is not limited in embodiments of the present invention.

In order to better understand the technical solution as described in any embodiment of the present invention, application scenarios in the related art are described first below.

In an embodiment, for an RRC connected state, a power-saving signal, i.e., a wakeup signal (WUS), or downlink control information (DCI) for power saving (DCP) is introduced. The WUS signal is a detection signal for low-power consumption. If a terminal detects the WUS signal, it means that the terminal needs to monitor a physical downlink control channel (PDCCH). However, if the WUS is not detected, the monitoring of the PDCCH is skipped.

In an embodiment, for an RRC idle state, the power-saving signal (such as PEI) is usually configured to be before a paging occasion (PO). If the terminal does not detect the power-saving signal, it needs to skip the paging DCI. Otherwise, the paging DCI needs to be monitored.

In an embodiment, the RRC connected state is enhanced, and a PDCCH skipping mechanism is introduced. That is, PDCCH skipping will be carried in the DCI to notify the terminal to skip monitoring for a period of time or to switch a search space group.

It should be noted that no matter what kind of power-saving signal, a modem of the terminal is required to detect the power-saving signal.

In an embodiment, it is desirable to introduce a separate transceiver (such as a low power wakeup receiver) to receive the power-saving signal, and the modem part or main radio part of the terminal can only be woken up after the separate transceiver is woken up, otherwise the modem part will remain in a dormant state.

As shown in FIG. 2, embodiments of the present invention provide a wireless communication method, which is performed by a terminal, and includes a following step.

In step 21, a predetermined working mode is using or stopped.

The predetermined working mode is a working mode that a second transceiver of the terminal is woken up after a first transceiver of the terminal receives a predetermined wakeup signal.

In an embodiment, the terminal independently determines to use or stop using the predetermined working mode; the predetermined working mode is a working mode that the second transceiver of the terminal is woken up after the first transceiver of the terminal receives the predetermined wakeup signal; and a power consumption of the first transceiver is less than that of the second transceiver.

In an embodiment, after receiving predetermined information sent by a network device, the terminal determines to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

It should be noted that the predetermined information may be response information.

In an embodiment, request information is sent to the access network device; the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. Response information sent by the access network device in response to the request information is received. The response information indicates acceptance or refusal of the request. Based on the response information, it is determined to use or stop using the predetermined working mode. For example, in response to the response information indicating acceptance of the request (request to use), it is determined to use the predetermined working mode; or in response to the response information indicating acceptance of the request (request to stop using), it is determined to stop using the predetermined working mode.

It should be noted that those skilled in the art can understand that the method provided in embodiments of the present invention may be performed alone or together with some methods in embodiments of the present invention or some methods in the related art.

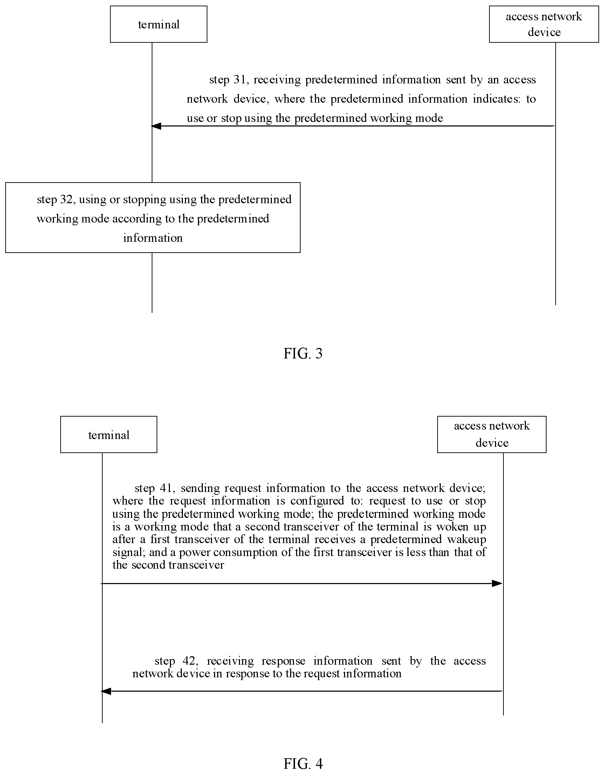

As shown in FIG. 3, embodiments of the present invention provide a wireless communication method, which is performed by a terminal, and includes the following steps.

In step 31, predetermined information sent by an access network device is received, and the predetermined information indicates: to use or stop using a predetermined working mode.

In step 32, the predetermined working mode is used or stopped according to the predetermined information.

In an embodiment, the predetermined information sent by the access network device via a third predetermined RRC message is received; or the predetermined information sent by the access network device via an RRC connection release message is received; or the predetermined information sent by the access network device via an RRC reconfiguration message is received.

It should be noted that those skilled in the art can understand that the method provided in embodiments of the present invention may be performed alone or together with some methods in embodiments of the present invention or some methods in the related art.

As shown in FIG. 4, embodiments of the present invention provide a wireless communication method, which is performed by a terminal, and includes the following steps.

In step 41, request information is sent to an access network device.

The request information is configured to: request to use or stop using a predetermined working mode; the predetermined working mode is a working mode that a second transceiver of the terminal is woken up after a first transceiver of the terminal receives a predetermined wakeup signal; and a power consumption of the first transceiver is less than that of the second transceiver.

In step 42, response information sent by the access network device in response to the request information is received.

Here, the terminal involved in the present invention may be, but not limited to, a mobile phone, a wearable device, a vehicle-mounted terminal, a road side unit (RSU), a smart home terminal, an industrial sensing device and/or a medical device, etc. In some embodiments, the terminal may be a Redcap terminal or a predetermined version of a new radio (NR) terminal (such as an NR terminal of R17).

The access network device involved in the present invention may be a base station, for example, a base station of a third generation mobile communication (3G) network, a base station of a fourth generation mobile communication (4G) network, or a base station of a fifth generation mobile communication (5G) network, or other evolved base stations.

The first transceiver may be a separate transceiver (such as a low power wakeup receiver).

The second transceiver may be a main radio receiver.

The wakeup signal may be a low power wakeup signal (WUS), which is used to wake up the second transceiver.

It should be noted that the predetermined working mode may be called a power saving mode or a super power saving mode. This working mode may correspond to a new RRC state, such as an RRC super idle state.

In an embodiment, the terminal is not in the predetermined working mode, the predetermined working mode is a working mode that the second transceiver of the terminal is woken up after the first transceiver of the terminal receives the predetermined wakeup signal; and the power consumption of the first transceiver is less than that of the second transceiver. The request information is sent to the access network device; and the request information is configured to: request to use the predetermined working mode. The response information sent by the access network device in response to the request information is received. In response to the response information indicating acceptance of the request, the terminal enters the predetermined working mode; or in response to the response information indicating: refusal of the request, the terminal does not enter the predetermined working mode.

In an embodiment, the terminal is in the predetermined working mode, the predetermined working mode is a working mode that the second transceiver of the terminal is woken up after the first transceiver of the terminal receives the predetermined wakeup signal; and the power consumption of the first transceiver is less than that of the second transceiver. The request information is sent to the access network device; and the request information is configured to: request to stop using the predetermined working mode. The response information sent by the access network device in response to the request information is received. In response to the response information indicating acceptance of the request, the terminal stops using the predetermined working mode.

In some embodiments, the terminal may receive the response information sent by the access network device via a newly added third predetermined RRC message; or the terminal may receive the response information sent by the access network device via an RRC connection release message; or the terminal may send the response information via an RRC reconfiguration message. It should be noted that the third predetermined RRC message may be a newly added RRC message, for example, a power saving mode setup response message.

It should be noted that the predetermined information indicates:
a transition duration, where if a second predetermined condition is met within the transition duration, the terminal enters the predetermined working mode; and/or
a channel monitoring parameter for the terminal operating in the predetermined working mode.

In an embodiment, the second predetermined condition includes at least one of:
no uplink data being received within the transition duration;
an evaluation criterion of relax measurement being met within the predetermined transition duration; or
an evaluation criterion of stopping measurement being met within the predetermined transition duration.

In an embodiment, the channel monitoring parameter includes at least one of:
a monitoring period;
a monitoring duration in each monitoring period;
a monitoring channel (for example, a low power WUS or a beacon frame);
time domain information, frequency domain information and/or code domain information for monitoring the predetermined wakeup signal;
a paging group identification (ID) to be monitored, so that the terminal can monitor on a resource corresponding to a group allocated; or
a duration in which the terminal is capable of being in the predetermined working mode. It should be noted that the power saving mode will terminate as long as there is uplink data transmission, even if the duration of the predetermined working mode has not been reached.

It should be noted that if the response information indicates refusal of the request; the response information also indicates that the terminal maintains a current working mode or RRC state. The current working mode may be a non-predetermined working mode.

In an embodiment, after performing cell reselection, the terminal sends the request information to the access network device; the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

In an embodiment, if the terminal is in an RRC non-connected state, the request information is sent to the access network device via a random access message in the random access process, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. The request information is sent to the access network device via the random access message, the random access message includes one of: a msgA message or a msg3 message; and the specific message content carried therein may be an RRC connection setup request or an RRC connection recovery request.

In an embodiment, if the terminal is in an RRC non-connected state, the request information is sent to the access network device via a first predetermined RRC message newly added in the random access process, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. It should be noted that the first predetermined RRC message may be a newly added RRC message, for example, a power saving mode setup request message.

It should be noted that the RRC non-connected state may be an RRC idle state or an RRC inactive state.

In an embodiment, if the terminal is in an RRC connected state, the request information is sent to the access network device via a second predetermined RRC message newly added, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. It should be noted that the second predetermined RRC message may be a newly added RRC message, for example, a power saving mode setup request message.

In an embodiment, if the terminal is in an RRC connected state, the request information is sent to the access network device via a user equipment assistance information (UAI) message, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

In an embodiment, the request information includes at least one of:
information that the terminal is in a relax measurement state;
information that the terminal is in a measurement stopped state;
information that the terminal meets an evaluation criterion of relax measurement;
information that the terminal meets an evaluation criterion of stopping measurement;
duration information estimated in which no uplink data is transmitted; or
duration information in which the predetermined working mode requested is used.

The evaluation criterion may be determined according to a scenario of relax measurement. It should be noted that the terminal in the RRC idle state (RRC_idle state) and the RRC inactive state (RRC_inactive state) will periodically perform radio resource management (RRM) measurement. However, in some scenarios, for example, when the terminal is in a stationary state or the terminal moves at a low speed, it is not necessary to perform the RRM measurement frequently. Therefore, in order to reduce the power consumption of the terminal, a concept of RRM relax measurement (also called RRM measurement relax) is proposed, that is, the terminal can perform the RRM relax measurement when certain measurement scenarios are met. For example, the terminal may reduce the number of RRM measurements (for example, increase the measurement interval of the RRM measurement). In addition, the strategy for performing the RRM relax measurement may be different for different measurement scenarios. For example, if the terminal is not at an edge of a cell, the terminal may not perform the RRM measurement on a neighboring cell; or if the terminal moves at a low speed, the terminal may perform the RRM measurement at a longer measurement interval.

In an embodiment, the terminal is in the predetermined working mode, the predetermined working mode is a working mode that the second transceiver of the terminal is woken up after the first transceiver of the terminal receives the predetermined wakeup signal; and the power consumption of the first transceiver is less than that of the second transceiver. In response to the terminal being in the predetermined working mode and the first predetermined condition being met, the predetermined working mode is stopped. The request information is sent to the access network device; and the request information is configured to: request to stop using the predetermined working mode.

In an embodiment, the first predetermined condition includes at least one of:
no radio frame being monitored;
the number of failures in decoding the predetermined wakeup signal reaching a predetermined number;
failure to decode the predetermined wakeup signal; or
an intensity of the predetermined wakeup signal decoded being lower than a predetermined intensity.

In embodiments of the present invention, the request information is sent to the access network device; the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. In this way, the terminal can send the request information to the access network device to request to use or stop using the working mode that the second transceiver of the terminal is woken up after the first transceiver of the terminal receives the predetermined wakeup signal, and the predetermined working mode can be used or stopped based on the request of the terminal. Therefore, the method of the present invention can adapt to the terminal's needs and has a strong adaptability, as compared with a manner where it is not clear how the terminal works based on the predetermined working mode or a manner where the terminal always works in the predetermined working mode.

It should be noted that those skilled in the art can understand that the method provided in embodiments of the present invention may be performed alone or together with some methods in embodiments of the present invention or some methods in the related art.

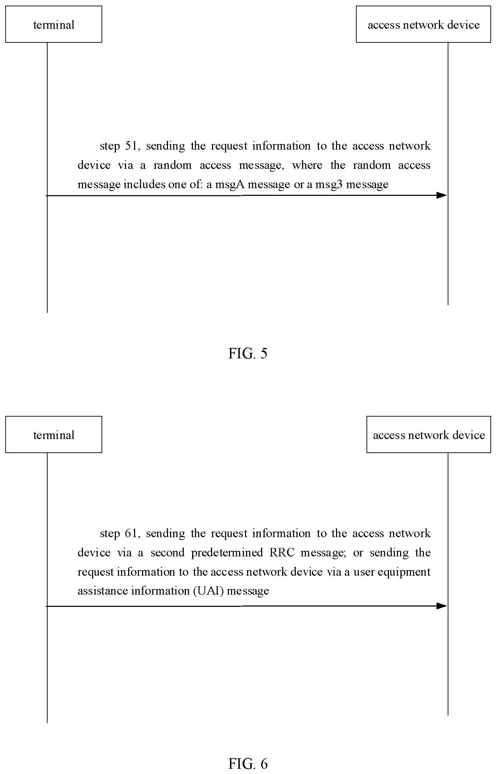

As shown in FIG. 5, embodiments of the present invention provide a wireless communication method, which is performed by a terminal, and includes a following step.

In step 51, request information is sent to an access network device via a random access message, and the random access message includes one of: a msgA message or a msg3 message.

The specific message content carried may be an RRC connection setup request or an RRC connection recovery request; or the request information is sent to the access network device via a first predetermined RRC message.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, it sends the request information to the access network device via the msg3 or the msgA in the random access process, the request information is configured to: request to use the predetermined working mode. The msg3 or the msgA may be the RRC connection setup request message or the RRC connection recovery request message. Response information sent by the access network device in response to the request information is received. In response to the response information indicating acceptance of the request, the terminal enters the predetermined working mode; or in response to the response information indicating: refusal of the request, the terminal does not enter the predetermined working mode.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, the request information is sent to the access network device via a first predetermined RRC message newly added in the random access process, and the request information is configured to request to use the predetermined working mode. Response information sent by the access network device in response to the request information is received. In response to the response information indicating: acceptance of the request, the terminal enters the predetermined working mode; or in response to the response information indicating: refusal of the request, the terminal does not enter the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, it sends the request information to the access network device via the msg3 or the msgA in the random access process, the request information is configured to: request to stop using the predetermined working mode. The msg3 may be the RRC connection setup request message or the RRC connection recovery request message. Response information sent by the access network device in response to the request information is received. In response to the response information indicating acceptance of the request, the terminal stops using the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, the request information is sent to the access network device via a first predetermined RRC message newly added in the random access process, and the request information is configured to request to stop using the predetermined working mode. Response information sent by the access network device in response to the request information is received. In response to the response information indicating: acceptance of the request, the terminal stops using the predetermined working mode.

It should be noted that those skilled in the art can understand that the method provided in embodiments of the present invention may be performed alone or together with some methods in embodiments of the present invention or some methods in the related art.

As shown in FIG. 6, embodiments of the present invention provide a wireless communication method, which is performed by a terminal, and includes a following step.

In step 61, request information is sent to an access network device via a second predetermined RRC message or a user equipment assistance information UAI message.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, it sends the request information to the access network device via the second predetermined RRC message newly added, the request information is configured to: request to use the predetermined working mode. Response information sent by the access network device in response to the request information is received. In response to the response information indicating acceptance of the request, the terminal enters the predetermined working mode; or in response to the response information indicating: refusal of the request, the terminal does not enter the predetermined working mode.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, the request information is sent to the access network device via the UAI message, and the request information is configured to request to use the predetermined working mode. Response information sent by the access network device in response to the request information is received. In response to the response information indicating: acceptance of the request, the terminal enters the predetermined working mode; or in response to the response information indicating: refusal of the request, the terminal does not enter the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, it sends the request information to the access network device via the second predetermined RRC message newly added, the request information is configured to: request to stop using the predetermined working mode. The msg3 may be an RRC connection setup request message or an RRC connection recovery request message. Response information sent by the access network device in response to the request information is received. In response to the response information indicating acceptance of the request, the terminal stops using the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, the request information is sent to the access network device via the UAI message, and the request information is configured to request to stop using the predetermined working mode. Response information sent by the access network device in response to the request information is received. In response to the response information indicating: acceptance of the request, the terminal stops using the predetermined working mode.

It should be noted that those skilled in the art can understand that the method provided in embodiments of the present invention may be performed alone or together with some methods in embodiments of the present invention or some methods in the related art.

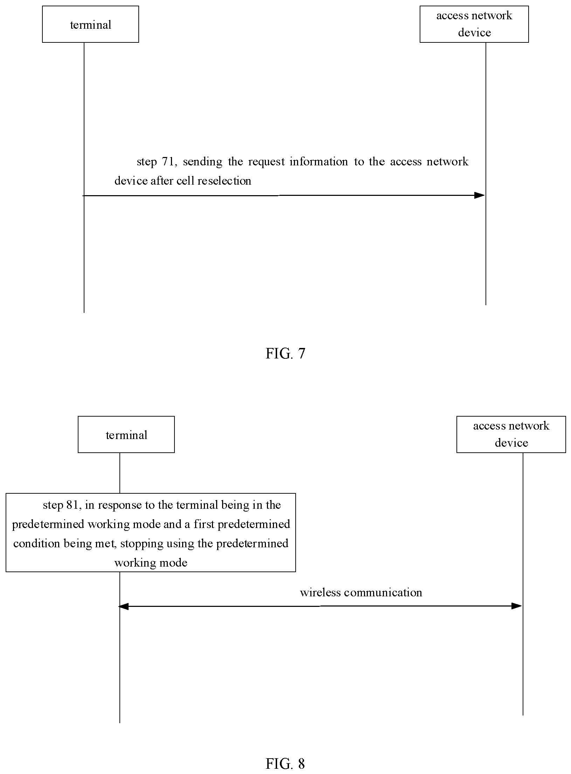

As shown in FIG. 7, embodiments of the present invention provide a wireless communication method, which is performed by a terminal, and includes a following step.

In step 71, request information is sent to an access network device after cell reselection.

In an embodiment, the terminal performs the cell reselection; after the cell reselection, the terminal sends the request information to the access network device; the request information is configured to: request to use or stop using a predetermined working mode; the predetermined working mode is a working mode that a second transceiver of the terminal is woken up after a first transceiver of the terminal receives a predetermined wakeup signal; and a power consumption of the first transceiver is less than that of the second transceiver.

It should be noted that those skilled in the art can understand that the method provided in embodiments of the present invention may be performed alone or together with some methods in embodiments of the present invention or some methods in the related art.

As shown in FIG. 8, embodiments of the present invention provide a wireless communication method, which is performed by a terminal, and includes a following step.

In step 81, in response to the terminal being in a predetermined working mode and a first predetermined condition being met, the predetermined working mode is stopped.

In an embodiment, the first predetermined condition includes at least one of:
no radio frame being monitored;
the number of failures in decoding the predetermined wakeup signal reaching a predetermined number;
failure to decode the predetermined wakeup signal; or
an intensity of the predetermined wakeup signal decoded being lower than a predetermined intensity.

In an embodiment, the terminal is not in the predetermined working mode, the predetermined working mode is a working mode that a second transceiver of the terminal is woken up after a first transceiver of the terminal receives a predetermined wakeup signal; and a power consumption of the first transceiver is less than that of the second transceiver. Request information is sent to an access network device; the request information is configured to request to use the predetermined working mode. Response information sent by the access network device in response to the request information is received. In response to the response information indicating: acceptance of the request, the terminal enters the predetermined working mode. In response to the terminal being in the predetermined working mode and the first predetermined condition being met, the predetermined working mode is stopped. Here, stopping the predetermined working mode or stopping using the predetermined working may be exiting the predetermined working mode. It should be noted that the terminal may not send the request information, and in response to the terminal being in the predetermined working mode and the first predetermined condition being met, the terminal autonomously stops using the predetermined working mode, which is not limited here.

In an embodiment, in response to stopping using the predetermined working mode, the request information is sent to the access network device, and the request information is configured to: request to stop using the predetermined working mode.

In an embodiment, in response to stopping using the predetermined working mode, notification information is sent to the access network device. It should be noted that the notification information may be sent in a similar sending manner to the request information, for example, by using a random access message mentioned above.

It should be noted that those skilled in the art can understand that the method provided in embodiments of the present invention may be performed alone or together with some methods in embodiments of the present invention or some methods in the related art.

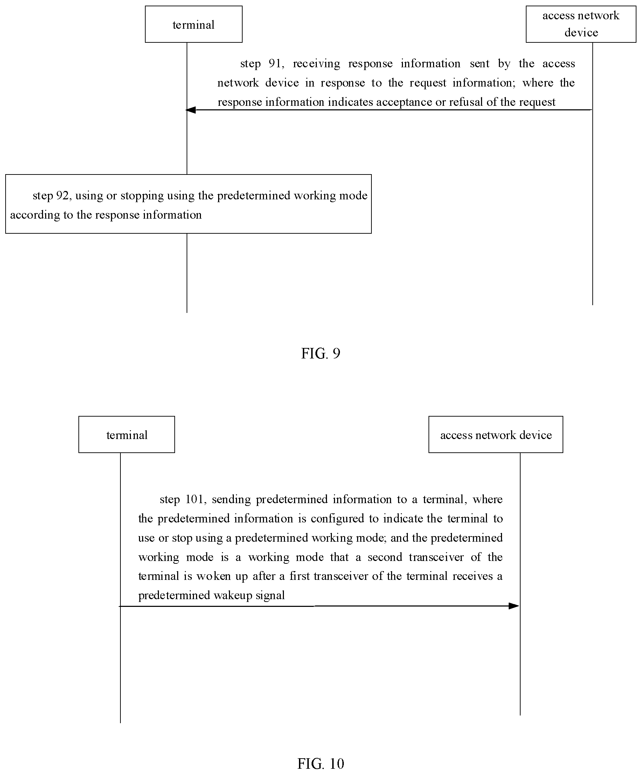

As shown in FIG. 9, embodiments of the present invention provide a wireless communication method, which is performed by a terminal, and includes the following steps.

In step 91, response information sent by an access network device in response to the request information is received; and the response information is configured to indicate: acceptance or refusal of the request.

In step 92, the predetermined working mode is used or stopped according to the response information.

In an embodiment, the terminal is not in the predetermined working mode, the predetermined working mode is a working mode that a second transceiver of the terminal is woken up after a first transceiver of the terminal receives a predetermined wakeup signal; and a power consumption of the first transceiver is less than that of the second transceiver. The request information is sent to the access network device; the request information is configured to request to use the predetermined working mode. The response information sent by the access network device in response to the request information is received. In response to the response information indicating: acceptance of the request, the terminal enters the predetermined working mode, or in response to the response information indicating: refusal of the request, the terminal does not enter the predetermined working mode.

In an embodiment, the terminal is in the predetermined working mode, the predetermined working mode is a working mode that a second transceiver of the terminal is woken up after a first transceiver of the terminal receives a predetermined wakeup signal; and a power consumption of the first transceiver is less than that of the second transceiver. The request information is sent to the access network device; the request information is configured to request to stop using the predetermined working mode. The response information sent by the access network device in response to the request information is received. In response to the response information indicating: acceptance of the request, the terminal stops using the predetermined working mode.

In some embodiments, the response information sent by the access network device via a third predetermined RRC message is received; or the response information sent by the access network device via an RRC connection release message is received; or the response information sent by the access network device via an RRC reconfiguration message is received.

It should be noted that those skilled in the art can understand that the method provided in embodiments of the present invention may be performed alone or together with some methods in embodiments of the present invention or some methods in the related art.

As shown in FIG. 10, embodiments of the present invention provide a wireless communication method, which is performed by an access network device, and includes a following step.

In step 101, predetermined information is sent to a terminal.

The predetermined information is configured to indicate the terminal to use or stop using a predetermined working mode; and the predetermined working mode is a working mode that a second transceiver of the terminal is woken up after a first transceiver of the terminal receives a predetermined wakeup signal.

In an embodiment, the access network device sends the predetermined information to the terminal; the terminal determines to use or stop using the predetermined working mode based on the predetermined information; the predetermined working mode is a working mode that the second transceiver of the terminal is woken up after the first transceiver of the terminal receives the predetermined wakeup signal; and a power consumption of the first transceiver is less than that of the second transceiver.

In an embodiment, the terminal sends request information to the access network device; the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. The access network device sends response information to the terminal in response to the request information. The response information indicates acceptance or refusal of the request. Based on the response information, the terminal determines to use or stop using the predetermined working mode. For example, in response to the response information indicating acceptance of the request (request to use), the terminal determines to use the predetermined working mode; or in response to the response information indicating acceptance of the request (request to stop using), the terminal determines to stop using the predetermined working mode. It should be noted that the predetermined information may be the response information.

In an embodiment, the predetermined information is sent to the terminal via a third predetermined RRC message; or the predetermined information is sent to the terminal via an RRC connection release message; or the predetermined information is sent to the terminal via an RRC reconfiguration message.

It should be noted that those skilled in the art can understand that the method provided in embodiments of the present invention may be performed alone or together with some methods in embodiments of the present invention or some methods in the related art.

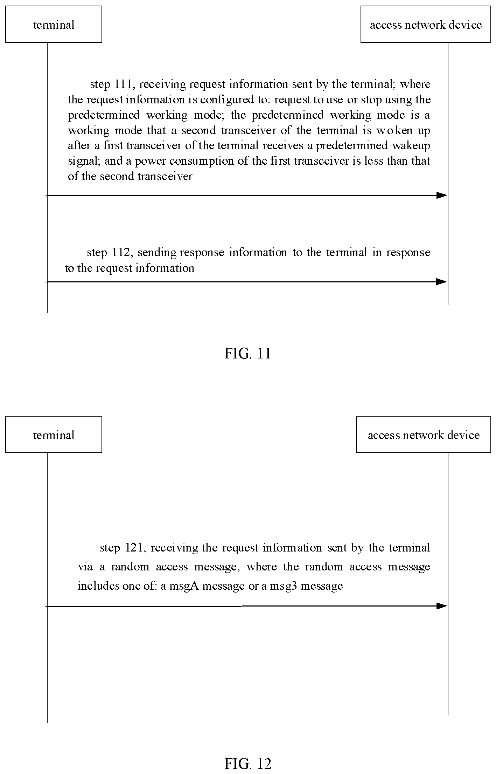

As shown in FIG. 11, embodiments of the present invention provide a wireless communication method, which is performed by an access network device, and includes the following steps.

In step 111, request information sent by a terminal is received.

The request information is configured to: request to use or stop using a predetermined working mode; the predetermined working mode is a working mode that a second transceiver of the terminal is woken up after a first transceiver of the terminal receives a predetermined wakeup signal; and a power consumption of the first transceiver is less than that of the second transceiver.

In step 112, response information is sent to the terminal in response to the request information.

Here, the terminal involved in the present invention may be, but not limited to, a mobile phone, a wearable device, a vehicle-mounted terminal, a road side unit (RSU), a smart home terminal, an industrial sensing device and/or a medical device, etc. In some embodiments, the terminal may be a Redcap terminal or a predetermined version of a new radio (NR) terminal (such as an NR terminal of R17).

The access network device involved in the present invention may be a base station, for example, a base station of a third generation mobile communication (3G) network, a base station of a fourth generation mobile communication (4G) network, or a base station of a fifth generation mobile communication (5G) network, or other evolved base stations.

The first transceiver may be a separate transceiver (such as a low power wakeup receiver).

The second transceiver may be a main radio receiver.

The wakeup signal may be a low power wakeup signal (WUS), which is used to wake up the second transceiver.

It should be noted that the predetermined working mode may be called a power saving mode or a super power saving mode. This working mode may correspond to a new RRC state, for example, this working mode may correspond to an RRC super idle state.

In an embodiment, the terminal is not in the predetermined working mode, the predetermined working mode is a working mode that the second transceiver of the terminal is woken up after the first transceiver of the terminal receives the predetermined wakeup signal; and the power consumption of the first transceiver is less than that of the second transceiver. The access network device receives the request information sent by the terminal; and the request information is configured to: request to use the predetermined working mode. The access network device sends the response information to the terminal in response to the request information, and the response information indicates acceptance or refusal of the request. In response to the response information indicating acceptance of the request, the terminal enters the predetermined working mode; or in response to the response information indicating: refusal of the request, the terminal does not enter the predetermined working mode.

In an embodiment, the terminal is in the predetermined working mode, the predetermined working mode is a working mode that the second transceiver of the terminal is woken up after the first transceiver of the terminal receives the predetermined wakeup signal; and the power consumption of the first transceiver is less than that of the second transceiver. The access network device receives the request information sent by the terminal; and the request information is configured to: request to stop using the predetermined working mode. The access network device sends the response information to the terminal in response to the request information, and the response information indicates acceptance of the request. In response to the response information indicating acceptance of the request, the terminal stops using the predetermined working mode.

In some embodiments, the access network device may send the response information to the terminal via a newly added third predetermined RRC message; or the access network device may send the response information to the terminal via an RRC connection release message; or the access network device may send the response information to the terminal via an RRC reconfiguration message.

It should be noted that the predetermined information indicates:
a transition duration, where if a second predetermined condition is met within the transition duration, the terminal enters the predetermined working mode; and/or
a channel monitoring parameter for the terminal operating in the predetermined working mode.

In an embodiment, the second predetermined condition includes at least one of:
no uplink data being received within the transition duration;
an evaluation criterion of relax measurement being met within the predetermined transition duration; or
an evaluation criterion of stopping measurement being met within the predetermined transition duration.

In an embodiment, the channel monitoring parameter includes at least one of:
a monitoring period;
a monitoring duration in each monitoring period;
a monitoring channel (for example, a low power WUS or a beacon frame);
time domain information, frequency domain information and/or code domain information for monitoring the predetermined wakeup signal;
a paging group identification (ID) to be monitored; or
a duration in which the terminal is capable of being in the predetermined working mode. It should be noted that the power saving mode will terminate as long as there is uplink data transmission, even if the duration of the predetermined working mode has not been reached.

It should be noted that if the response information indicates refusal of the request; the response information also indicates that the terminal maintains a current working mode or RRC state. The current working mode may be a non-predetermined working mode.

In an embodiment, after the terminal performs cell reselection, the access network device receives the request information sent by the terminal; the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

In an embodiment, if the terminal is in an RRC non-connected state, the access network device receives the request information sent by the terminal via a MSG3 in the random access process, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver. The msg3 may be an RRC connection setup request message or an RRC connection recovery request message.

In an embodiment, if the terminal is in an RRC non-connected state, the access network device receives the request information sent by the terminal via a first predetermined RRC message newly added in the random access process, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

It should be noted that the RRC non-connected state may be an RRC idle state or an RRC inactive state.

In an embodiment, if the terminal is in an RRC connected state, the access network device receives the request information sent by the terminal via a second predetermined RRC message newly added, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

In an embodiment, if the terminal is in an RRC connected state, the access network device receives the request information sent by the terminal via a user equipment assistance information (UAI) message, the request information is configured to: request to use or stop using the predetermined working mode; the predetermined working mode is a working mode that the second transceiver of the terminal is woken up after the first transceiver of the terminal receives the predetermined wakeup signal; and the power consumption of the first transceiver is less than that of the second transceiver.

In an embodiment, the request information includes at least one of:
information that the terminal is in a relax measurement state;
information that the terminal is in a measurement stopped state;
information that the terminal meets an evaluation criterion of relax measurement;
information that the terminal meets an evaluation criterion of stopping measurement;
duration information estimated in which no uplink data is transmitted; or
duration information in which the predetermined working mode requested is used.

The evaluation criterion may be determined according to a scenario of relax measurement. It should be noted that the terminal in the RRC idle state (RRC_idle state) and the RRC inactive state (RRC_inactive state) will periodically perform radio resource management (RRM) measurement. However, in some scenarios, for example, when the terminal is in a stationary state or the terminal moves at a low speed, it is not necessary to perform the RRM measurement frequently. Therefore, in order to reduce the power consumption of the terminal, a concept of RRM relax measurement (also called RRM measurement relax) is proposed, that is, the terminal can perform the RRM relax measurement when certain measurement scenarios are met. For example, the terminal may reduce the number of RRM measurements (for example, increase the measurement interval of the RRM measurement). In addition, the strategy for performing the RRM relax measurement may be different for different measurement scenarios. For example, if the terminal is not at an edge of a cell, the terminal may not perform the RRM measurement on a neighboring cell; or if the terminal moves at a low speed, the terminal may perform the RRM measurement at a longer measurement interval.

In an embodiment, the terminal is in the predetermined working mode, the predetermined working mode is a working mode that the second transceiver of the terminal is woken up after the first transceiver of the terminal receives the predetermined wakeup signal; and the power consumption of the first transceiver is less than that of the second transceiver. In response to the terminal being in the predetermined working mode and the first predetermined condition being met, the terminal stops using the predetermined working mode. The request information is sent to the access network device; and the request information is configured to: request to stop using the predetermined working mode. The access network device receives the request information. The access network device sends the response information to the terminal in response to the request information, and the response information indicates acceptance of the request.

In an embodiment, the first predetermined condition includes at least one of:
no radio frame being monitored;
the number of failures in decoding the predetermined wakeup signal reaching a predetermined number;
failure to decode the predetermined wakeup signal; or
an intensity of the predetermined wakeup signal decoded being lower than a predetermined intensity.

It should be noted that those skilled in the art can understand that the method provided in embodiments of the present invention may be performed alone or together with some methods in embodiments of the present invention or some methods in the related art.

As shown in FIG. 12, embodiments of the present invention provide a wireless communication method, which is performed by an access network device, and includes a following step.

In step 121, request information sent by the terminal is received via a random access message, and the random access message includes one of: a msgA message or a msg3 message. The specific message content carried may be an RRC connection setup request message or an RRC connection recovery request.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, the access network device receives the request information sent by the terminal via the msg3 or the msgA in the random access process, the request information is configured to: request to use the predetermined working mode. The msg3 may be the RRC connection setup request message or the RRC connection recovery request message. The access network device sends response information to the terminal in response to the request information, and the response information indicates acceptance or refusal of the request. In response to the response information indicating acceptance of the request, the terminal enters the predetermined working mode; or in response to the response information indicating: refusal of the request, the terminal does not enter the predetermined working mode.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, the access network device receives the request information sent by the terminal via a first predetermined RRC message newly added in the random access process, and the request information is configured to request to use the predetermined working mode. The access network device sends response information to the terminal in response to the request information, and the response information indicates acceptance or refusal of the request. In response to the response information indicating: acceptance of the request, the terminal enters the predetermined working mode; or in response to the response information indicating: refusal of the request, the terminal does not enter the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, the access network device receives the request information sent by the terminal via the msg3 message or the msgA message in the random access process, the request information is configured to: request to stop using the predetermined working mode. The msg3 may be the RRC connection setup request message or the RRC connection recovery request message. The access network device sends response information to the terminal in response to the request information. In response to the response information indicating acceptance of the request, the terminal stops using the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC non-connected state, the access network device receives the request information sent by the terminal via a first predetermined RRC message newly added in the random access process, and the request information is configured to request to stop using the predetermined working mode. The access network device sends response information to the terminal in response to the request information. In response to the response information indicating: acceptance of the request, the terminal stops using the predetermined working mode.

It should be noted that those skilled in the art can understand that the method provided in embodiments of the present invention may be performed alone or together with some methods in embodiments of the present invention or some methods in the related art.

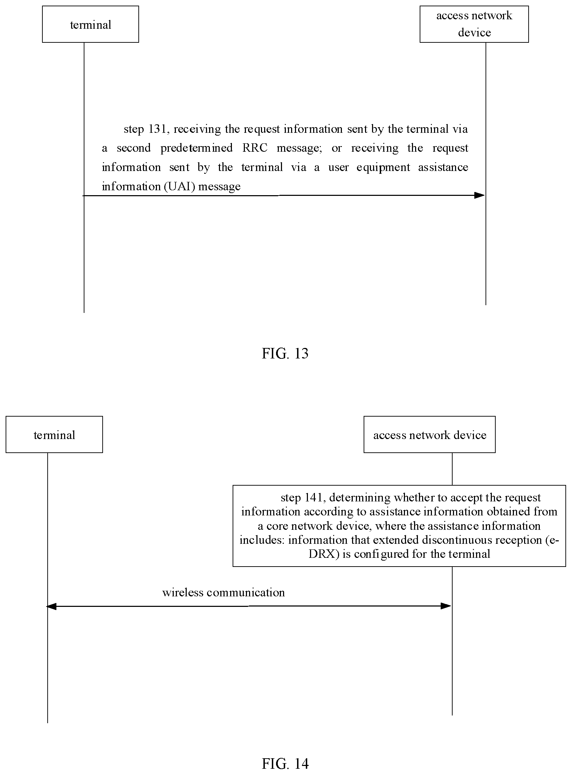

As shown in FIG. 13, embodiments of the present invention provide a wireless communication method, which is performed by an access network device, and includes a following step.

In step 131, the request information sent by a terminal is received via a second predetermined RRC message or a user equipment assistance information UAI message.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, the access network device receives the request information sent by the terminal via the second predetermined RRC message newly added, the request information is configured to: request to use the predetermined working mode. The access network device sends response information to the terminal in response to the request information, and the response information indicates acceptance or refusal of the request. In response to the response information indicating acceptance of the request, the terminal enters the predetermined working mode; or in response to the response information indicating: refusal of the request, the terminal does not enter the predetermined working mode.

In an embodiment, the terminal is not in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, the access network device receives the request information sent by the terminal via the UAI message, and the request information is configured to request to use the predetermined working mode. The access network device sends response information to the terminal in response to the request information, and the response information indicates acceptance or refusal of the request. In response to the response information indicating: acceptance of the request, the terminal enters the predetermined working mode; or in response to the response information indicating: refusal of the request, the terminal does not enter the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, the access network device receives the request information sent by the terminal via the second predetermined RRC message newly added, and the request information is configured to: request to stop using the predetermined working mode. The msg3 may be an RRC connection setup request message or an RRC connection recovery request message. The access network device sends response information to the terminal in response to the request information. In response to the response information indicating acceptance of the request, the terminal stops using the predetermined working mode.

In an embodiment, the terminal is in a predetermined working mode, the predetermined working mode is a working mode that a second transceiver of the terminal is woken up after a first transceiver of the terminal receives a predetermined wakeup signal; and a power consumption of the first transceiver is less than that of the second transceiver. If the terminal is in an RRC connected state, the access network device receives the request information sent by the terminal via the UAI message, and the request information is configured to request to stop using the predetermined working mode. The access network device sends response information to the terminal in response to the request information. In response to the response information indicating: acceptance of the request, the terminal stops using the predetermined working mode.

It should be noted that those skilled in the art can understand that the method provided in embodiments of the present invention may be performed alone or together with some methods in embodiments of the present invention or some methods in the related art.

As shown in FIG. 14, embodiments of the present invention provide a wireless communication method, which is performed by an access network device, and includes a following step.

In step 141, whether to accept request information is determined according to assistance information obtained from a core network device, and the assistance information includes: information that extended discontinuous reception (e-DRX) is configured for the terminal.

In an embodiment, the request information sent by the terminal is received; the request information is configured to: request to use or stop using a predetermined operating mode; the predetermined working mode is a working mode that a second transceiver of the terminal is woken up after a first transceiver of the terminal receives a predetermined wakeup signal; and a power consumption of the first transceiver is less than that of the second transceiver. Whether to accept the request information is determined according to the assistance information obtained from the core network device, and the assistance information includes: information that discontinuous reception (DRX) is configured for the terminal.

In response to determining to accept the request information, response information is sent to the terminal in response to the request information, and the response information indicates: acceptance of the request; or in response to determining to refuse the request information, response information is sent to the terminal in response to the request information, and the response information indicates: refusal of the request.

It should be noted that those skilled in the art can understand that the method provided in embodiments of the present invention may be performed alone or together with some methods in embodiments of the present invention or some methods in the related art.

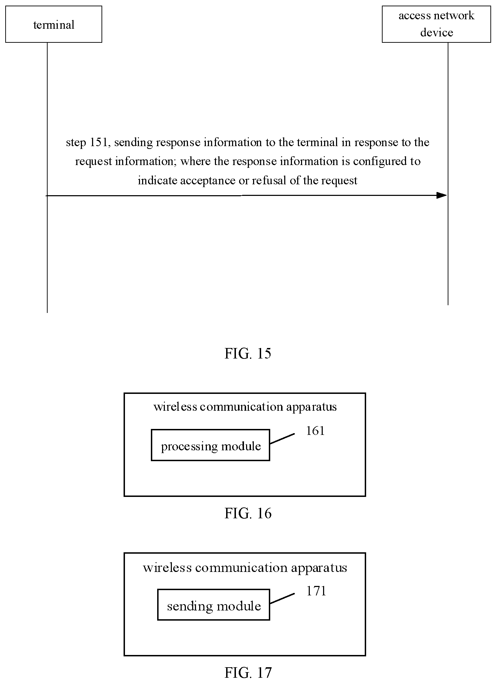

As shown in FIG. 15, embodiments of the present invention provide a wireless communication method, which is performed by an access network device, and includes a following step.

In step 151, response information is sent to the terminal in response to the request information.

The response information is configured to indicate: acceptance or refusal of the request.

In an embodiment, the request information sent by the terminal is received; the request information is configured to: request to use or stop using a predetermined working mode; the predetermined working mode is a working mode that a second transceiver of the terminal is woken up after a first transceiver of the terminal receives a predetermined wakeup signal; and a power consumption of the first transceiver is less than that of the second transceiver. Whether to accept the request information is determined according to the assistance information obtained from the core network device, and the assistance information includes: information that discontinuous reception (DRX) is configured for the terminal. In response to determining to accept the request information, the response information is sent to the terminal in response to the request information, and the response information indicates: acceptance of the request; or in response to determining to refuse the request information, the response information is sent to the terminal in response to the request information, and the response information indicates: refusal of the request.

In an embodiment, the terminal is not in the predetermined working mode, the predetermined working mode is a working mode that a second transceiver of the terminal is woken up after a first transceiver of the terminal receives a predetermined wakeup signal; and a power consumption of the first transceiver is less than that of the second transceiver. The access network device receives the request information sent by the terminal; and the request information is configured to request to use the predetermined working mode. The access network device sends the response information to the terminal in response to the request information. In response to the response information indicating: acceptance of the request, the terminal enters the predetermined working mode, or in response to the response information indicating: refusal of the request, the terminal does not enter the predetermined working mode.

In an embodiment, the terminal is in the predetermined working mode, the predetermined working mode is a working mode that a second transceiver of the terminal is woken up after a first transceiver of the terminal receives a predetermined wakeup signal; and a power consumption of the first transceiver is less than that of the second transceiver. The access network device receives the request information sent by the terminal; the request information is configured to request to stop using the predetermined working mode. The access network device sends the response information to the terminal in response to the request information. In response to the response information indicating: acceptance of the request, the terminal stops using the predetermined working mode.

In some embodiments, the access network device may send the response information to the terminal via a third predetermined RRC message; or the access network device may send the response information to the terminal via an RRC connection release message; or the access network device may send the response information to the terminal via an RRC reconfiguration message.

It should be noted that those skilled in the art can understand that the method provided in embodiments of the present invention may be performed alone or together with some methods in embodiments of the present invention or some methods in the related art.

As shown in FIG. 16, embodiments of the present invention provide a wireless communication apparatus, which includes a processing module 161 configured to use or stop using a predetermined working mode.

The predetermined working mode is a working mode that a second transceiver of the terminal is woken up after a first transceiver of the terminal receives a predetermined wakeup signal.

It should be noted that those skilled in the art can understand that the method provided in embodiments of the present invention may be performed alone or together with some methods in embodiments of the present invention or some methods in the related art.

As shown in FIG. 17, embodiments of the present invention provide a wireless communication apparatus, which includes a sending module 171, configured to send predetermined information to a terminal.

The predetermined information is configured to indicate to use or stop using a predetermined working mode; and the predetermined working mode is a working mode that a second transceiver of the terminal is woken up after a first transceiver of the terminal receives a predetermined wakeup signal.

It should be noted that those skilled in the art can understand that the method provided in embodiments of the present invention may be performed alone or together with some methods in embodiments of the present invention or some methods in the related art.

Embodiments of the present invention provide a communication device, which includes: which includes: a processor; and a memory for storing instructions executable by the processor. The processor is configured to perform the method according to any embodiment of the present invention when running the executable instructions.

The processor may include various types of storage media, which are non-transitory computer storage media that can continue to memorize information stored thereon after the communication device is powered off.

The processor may be connected to the memory through a bus, etc., and is configured to read executable programs stored in the memory.

Embodiments of the present invention also provide a computer storage medium having stored therein computer-executable programs that, when executed by a processor, cause the method according to any embodiment of the present invention to be performed.

Regarding the apparatus in the above embodiments, the specific manner in which each module performs operations has been described in detail in the embodiments related to the method, which will not be elaborated here.

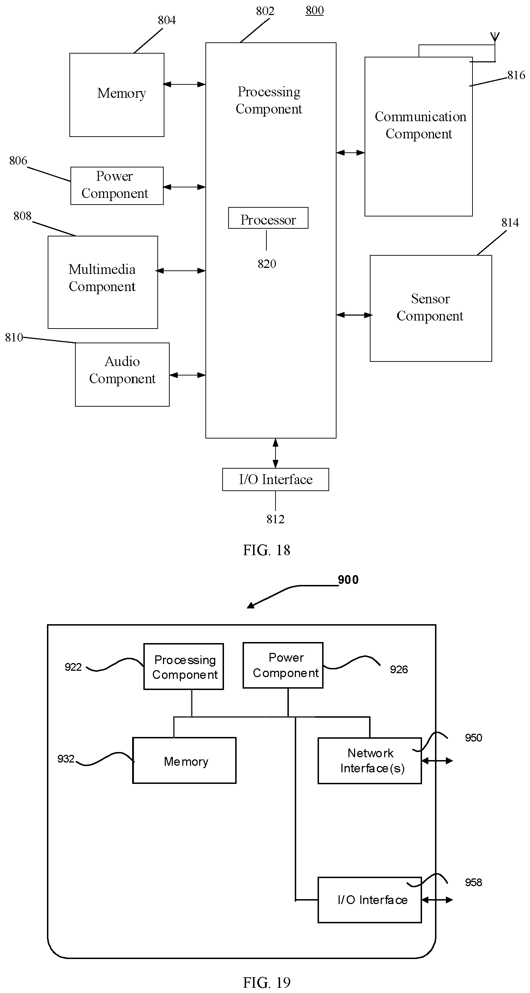

As shown in FIG. 18, an embodiment of the present invention provides a structure of a terminal.

Referring to the terminal 800 shown in FIG. 18, embodiments of the present invention provides a terminal 800. The terminal 800 may be a mobile phone, a computer, a digital broadcast terminal, a messaging device, a game console, a tablet device, a medical device, a fitness device, a personal digital assistant, or the like.

Referring to FIG. 18, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the device 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned method.

In an illustrative embodiment, there is also provided a non-transitory computer readable storage medium including instructions, such as included in the memory 804, executable by the processor 820 in the terminal 800, for completing the above-mentioned method. For example, the non-transitory computer-readable storage medium may be a ROM, a random access memory (RAM), a CD-ROM, a magnetic tape, a floppy disc, an optical data storage device, and the like.

As shown in FIG. 19, an embodiment of the present invention shows a structure of a base station. For example, the base station 900 may be provided as a network side device. Referring to FIG. 19, the base station 900 includes a processing component 922, which further includes one or more processor, and a memory resource represented by a memory 932 configured to store instructions executable by the processing component 922, such as application programs. The application programs stored in the memory 932 may include one or more modules each corresponding to a set of instructions. In addition, the processing component 922 is configured to execute instructions to perform any method performed by the base station as described above.

The base station 900 may also include a power component 926 configured to perform the power management of the base station 900, a wired or wireless network interfaces 950 configured to connect the base station 900 to a network, and an input-output (I/O) interface 958. The base station 900 may operate based on an operating system stored in the memory 932, such as Windows Server TM, Mac OS XTM, UnixTM, LinuxTM, FreeBSDTM, or the like.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A wireless communication method, performed by a terminal, comprising:
using or stopping using a predetermined working mode;
wherein the predetermined working mode is a working mode that a second transceiver of the terminal is woken up after a first transceiver of the terminal receives a predetermined wakeup signal.

2. The method according to claim 1, further comprising:
receiving predetermined information sent by an access network device, wherein the predetermined information indicates: to use or stop using the predetermined working mode;
wherein using or stopping using the predetermined working mode comprises:
using or stopping using the predetermined working mode according to the predetermined information.

3. The method according to claim 2, wherein receiving the predetermined information sent by the access network device comprises:
receiving the predetermined information sent by the access network device via a third predetermined RRC message;
receiving the predetermined information sent by the access network device via an RRC connection release message; or
receiving the predetermined information sent by the access network device via an RRC reconfiguration message.

4. The method according to claim 2, further comprising:
sending request information to the access network device; wherein the request information is configured to: request to use or stop using the predetermined working mode;
wherein receiving the predetermined information sent by the access network device comprises:
receiving response information sent by the access network device in response to the request information.

5. The method according to claim 4, wherein the terminal is in a radio resource control (RRC) non-connected state; and
sending the request information to the access network device comprises:
sending the request information to the access network device via a random access message, where the random access message comprises one of: a msgA message or a msg3 message; or
sending the request information to the access network device via a first predetermined RRC message.

6. The method according to claim 4, wherein the terminal is in a radio resource control (RRC) connected state; and
sending the request information to the access network device comprises:
sending the request information to the access network device via a second predetermined RRC message; or
sending the request information to the access network device via a user equipment assistance information (UAI) message.

7. The method according to claim 4, wherein the request information comprises at least one of:
information that the terminal is in a relax measurement state;
information that the terminal is in a measurement stopped state;
information that the terminal meets an evaluation criterion of relax measurement;
information that the terminal meets an evaluation criterion of stopping measurement;
duration information estimated in which no uplink data is transmitted; or
duration information in which the predetermined working mode requested is used.

8. The method according to claim 4, wherein the terminal is in an RRC non-connected state; and
sending the request information to the access network device comprises:
sending the request information to the access network device after cell reselection.

9. The method according to claim 2, wherein the predetermined information indicates:
a transition duration, wherein if a second predetermined condition is met within the transition duration, the terminal enters the predetermined working mode; and/or
a channel monitoring parameter for the terminal operating in the predetermined working mode.

10. The method according to claim 9, wherein the second predetermined condition comprises at least one of:
no uplink data being received within the transition duration;
an evaluation criterion of relax measurement being met within the predetermined transition duration; or
an evaluation criterion of stopping measurement being met within the predetermined transition duration.

11. The method according to claim 9, wherein the channel monitoring parameter comprises at least one of:
a monitoring period;
a monitoring duration in each monitoring period;
a monitoring channel;
time domain information, frequency domain information and/or code domain information for monitoring the predetermined wakeup signal;
a paging group identification (ID) to be monitored; or
a duration in which the terminal is capable of being in the predetermined working mode.

12. The method according to claim 9, wherein the response information indicates refusal of the request; and the response information further indicates that the terminal maintains a current working mode or RRC state.

13. The method according to claim 1, further comprising:
in response to the terminal being in the predetermined working mode and a first predetermined condition being met, stopping using the predetermined working mode.

14. The method according to claim 13, wherein the first predetermined condition comprises at least one of:
no radio frame being monitored;
the number of failures in decoding the predetermined wakeup signal reaching a predetermined number;
failure to decode the predetermined wakeup signal; or
an intensity of the predetermined wakeup signal decoded being lower than a predetermined intensity.

15. A wireless communication method, performed by an access network device, comprising:
sending predetermined information to a terminal;
wherein the predetermined information is configured to indicate to use or stop using a predetermined working mode; and the predetermined working mode is a working mode that a second transceiver of the terminal is woken up after a first transceiver of the terminal receives a predetermined wakeup signal.

16. The method according to claim 15, wherein sending the predetermined information to the terminal comprises:
sending the predetermined information to the terminal via a third predetermined RRC message;
sending the predetermined information to the terminal via an RRC connection release message; or
sending the predetermined information to the terminal via an RRC reconfiguration message.

17. The method according to claim 16, further comprising:
receiving request information sent by the terminal; wherein the request information is configured to: request to use or stop using the predetermined working mode;
wherein sending the predetermined information to the terminal comprises:
sending response information to the terminal in response to the request information.

18. The method according to claim 17, wherein the terminal is in a radio resource control (RRC) non-connected state;
receiving the request information sent by the terminal comprises:
receiving the request information sent by the terminal via a random access message, wherein the random access message comprises one of: a msgA message or a msg3 message; or
receiving the request information sent by the terminal via a first predetermined RRC message.

19. The method according to claim 17, wherein the terminal is in a radio resource control (RRC) connected state;
receiving the request information sent by the terminal comprises:
receiving the request information sent by the terminal via a second predetermined RRC message; or
receiving the request information sent by the terminal via a user equipment assistance information (UAI) message.

20. The method according to claim 17, wherein the request information comprises at least one of:
information that the terminal is in a relax measurement state;
information that the terminal is in a measurement stopped state;
information that the terminal meets an evaluation criterion of relax measurement;
information that the terminal meets an evaluation criterion of stopping measurement;
duration information estimated in which no uplink data is transmitted; or
duration information in which the predetermined working mode requested is used.

21. The method according to claim 17, further comprising:
determining whether to accept the request information according to assistance information obtained from a core network device, wherein the assistance information comprises: information that extended discontinuous reception (e-DRX) is configured for the terminal.

22. The method according to claim 15, wherein the predetermined information indicates:
a transition duration, wherein if a second predetermined condition is met within the transition duration, the terminal enters the predetermined working mode; and/or
a channel monitoring parameter for the terminal operating in the predetermined working mode.

23. The method according to claim 22, wherein the second predetermined condition comprises at least one of:
no uplink data being received within the transition duration;
an evaluation criterion of relax measurement being met within the predetermined transition duration; or
an evaluation criterion of stopping measurement being met within the predetermined transition duration.

24. The method according to claim 22, wherein the channel monitoring parameter comprises at least one of:
a monitoring period;
a monitoring duration in each monitoring period;
a monitoring channel;
time domain information, frequency domain information and/or code domain information for monitoring the predetermined wakeup signal;
a paging group identification (ID) to be monitored; or
a duration in which the terminal is capable of being in the predetermined working mode.

25. The method according to claim 17, wherein the response information indicates refusal of the request; and the response information further indicates that the terminal maintains a current working mode or RRC state.

26. A wireless communication apparatus, comprising:
a processing module, configured to use or stop using a predetermined working mode;
wherein the predetermined working mode is a working mode that a second transceiver of the terminal is woken up after a first transceiver of the terminal receives a predetermined wakeup signal.

27. A wireless communication apparatus, comprising:
a sending module, configured to send predetermined information to a terminal;
wherein the predetermined information is configured to indicate to use or stop using a predetermined working mode; and the predetermined working mode is a working mode that a second transceiver of the terminal is woken up after a first transceiver of the terminal receives a predetermined wakeup signal.

28. A communication device, comprising:
a memory; and
a processor, connected to the memory, and configured to perform the method according to any one of claims 1 to 14 or claims 15 to 25 by executing computer-executable instructions stored on the memory.

29. A computer storage medium having stored therein computer-executable instructions that, when executed by a processor, cause the method according to any one of claims 1 to 14 or claims 15 to 25 to be performed.
